# EUROPEAN PATENT APPLICATION

(11) **EP 2 083 355 A1**
(43) Date of publication of application: **29.07.2009**
(21) Application number: 08300050.5
(22) Date of filing: 25.01.2008
(51) Int. Cl.: G06F 9/445

(54) **Copy-protected software cartridge**

(71) Applicant: Thomson Licensing, 92100 Boulogne-Billancourt (FR)
(72) Inventor: Diehl, Eric, 35340 Liffre (FR); Eluard, Marc, 35000, Rennes (FR); Prigent, Nicolas, 35000, Rennes (FR)
(74) Representative: Ruellan-Lemonnier, Brigitte

(57) **Abstract**

A cartridge (2) preferably for use with a game console (1). The cartridge (2) comprises a ROM (21), a non-volatile memory (22), a processor (20) and a dispatcher (23). An application (3) running on the console (1) may communicate with the dispatcher (23) using predefined addresses, which enables the dispatcher (23) to access the ROM (21), the non-volatile memory (22), or the processor (20), as the case may be. The invention improves on the prior art copy protection as no generic copy method may be found if the addresses are changed from one cartridge to another. In addition, to copy the software, the processor (20) must be emulated.

## Description

### FIELD OF THE INVENTION

The present invention relates generally to computer software, and in particular to copy protection for software on cartridges.

### BACKGROUND OF THE INVENTION

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

Computer programs, and in particular computer games (which will hereinafter be used as a non-limitative example), have long been stored on so called cartridges for ease of use, other advantages being instant access to the software and the robustness of the package. Such cartridges typically comprise an interface for interaction with a console, a ROM that stores the software application, and a further memory, preferably non-volatile, for storing game parameters.

However, software on these cartridges is almost as vulnerable to copying as 'normal' software. Naturally, software providers have come up with defences against copying, such as the use of dedicated interfaces and chipsets, and encryption of the software application. Unfortunately, hackers have been able to crack the prior art defences and practically all current programs may be found on the Internet, e.g. on sites dedicated to hacking.

European patent application EP 07300965 teaches a system for protection of pre-recorded media. The media is associated with a secure processor that stores information and software that a player needs in order to fully access the content. Whenever the player needs this information or the result of the software, it contacts the secure processor and waits for the response. A disadvantage with this solution is that players that are not adapted to interact with the secure processor are unable to use the content.

It can therefore be appreciated that there is a need for a solution that improves copy protection of software on cartridges, preferably enabling the continued use of existing consoles. This invention provides such a solution.

### SUMMARY OF THE INVENTION

In a first aspect, the invention is directed to a cartridge adapted for use with a console. The cartridge comprises an interface adapted to communicate with an interface of the console; a first memory adapted to store at least parts of an application; a second memory adapted to store application parameters; a processor adapted to execute at least one function. The cartridge further comprises a dispatcher adapted to receive data comprising addressing information from the interface, the data originating from the console executing the application. The dispatcher is further adapted to, depending on the value of the addressing information, communicate with the first memory, the second memory, and the processor.

In a first preferred embodiment, the first memory is a Read-Only Memory.

In a second preferred embodiment, the second memory is a non-volatile memory.

In a third preferred embodiment, the processor is adapted to return a value and the dispatcher is adapted to return the value to the application.

In a fourth preferred embodiment, the processor is a secure processor.

In a fifth preferred embodiment, the dispatcher further comprises a buffer adapted for use in communication with the processor.

In a second aspect, the invention is directed to a method for executing an application on a console that interacts with a cartridge. The application being executed by a processor of the console sends addressing information to the cartridge. A dispatcher in the cartridge receives the addressing information and, depending on the addressing information, communicating with one of a first memory adapted to store at least parts of an application, a second memory adapted to store application parameters, and a processor in order to read from a memory, write from a memory, or have a function executed by the processor and return the result of the function.

### BRIEF DESCRIPTION OF THE DRAWINGS

Preferred features of the present invention will now be described, by way of non-limiting example, with reference to the accompanying drawings, in which:
Figure 1 illustrates a console with a cartridge according to a preferred embodiment of the invention; and
Figure 2 illustrates a virtual memory space according to a preferred embodiment of the invention.

### PREFERRED EMBODIMENT OF THE INVENTION

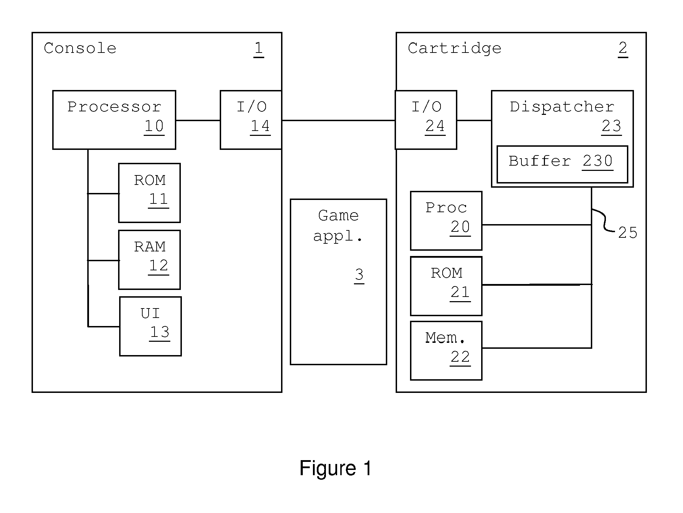

Figure 1 illustrates a console 1 with a cartridge 2 according to a preferred embodiment of the invention. In the description, the term "console" is used to denote a device that is able to interact with a cartridge so as to execute an application stored on it, and the term "cartridge" is used to denote a physical object using solid state memory to store the application.

The console comprises one or more processors (hereinafter "processor") 10 for execution of software applications and an interface manager 14, that implements a physical and logical interface, for interaction with the cartridge 2. The interface 14 may be through a typical address/data bidirectional bus or through calls to one or more functions.

The console further comprises read-only memory (ROM) 11 storing at least one application, firmware, and middleware; random access memory (RAM) 12 storing temporary data and a game application 3 loaded from the cartridge 2; a user interface 13 for interaction with one or more users through e.g. screen and loudspeakers, and key, buttons, and touch screens. The processor 10 is adapted to execute the at least one application in the ROM and the game application 3 stored in the RAM 12.

The interface 14 preferably detects the presence of the cartridge 2 automatically. Typically, when the cartridge 2 is not present, the bus is not powered, and no power is supplied. As soon as the cartridge 2 is present, the power is supplied to the cartridge 2, and the data bus is also powered.

The cartridge 2 comprises an interface 24 adapted to communicate with the interface 14 of the console 1. The cartridge further comprises a ROM 21 that stores the game application at a fixed address (such as 0x00000) and at least one non-volatile memory (hereinafter "non-volatile memory") 22 adapted to store e.g. game parameters such as the players current position in the game. The non-volatile memory 22 may for example be an Electrical Erasable PROgrammable Memory (EEPROM) or a Flash memory. The non-volatile memory 22 preferably starts at NVM ADDRESS START and ends at NVM ADDRESS END. The cartridge 2 also comprises a protection processor 20 (that preferably, but not necessarily, is a secure processor, and that may be implemented in more than one hardware component) adapted to execute one or more functions, and a dispatcher 23. The dispatcher 23 is preferably a dedicated chip with a serial communication link 25 with the protection processor 20.

The dispatcher 23 preferably functions as follows. If the address on the data bus of the interface manager 24 is in the range: NVM ADDRESS START to NVM ADDRESS END, then it correspondingly addresses the non-volatile memory 22; PROCESSOR_START to PROCESSOR_END, then it reads from or writes to an internal buffer 230; PROCESSOR_WRITE, then it sends the content of its internal buffer 230 to the protection processor 20 through the serial bus 25. When receiving data from the protection processor 20 through the serial bus 25, it stores the data in the internal buffer 230 and sets an internal flag DATA_READY to 1. Furthermore, when the address on the data bus of the interface manager 24 is PROCESSOR_READ_FLAG, it returns DATA_READY to the console 1 and sets the flag DATA_READY to 0. In all other cases, the dispatcher 23 addresses the ROM 21. It will be appreciated that the address received by the dispatcher 23 also may be a parameter of a function or command, a further parameter identifying the destination device; the important thing is that the dispatcher receives address information that enables it to route the request correctly.

The protection processor 20, the ROM 21, the non-volatile memory 22, the dispatcher 23, and the interface 24 may be implemented in a single chip, such as a system on chip (SOC) or as two or more separate circuits.

The game application 3 is a virtual entity used to clarify the invention. The game application may be said to be the software program from at least the ROM 21 (parts of the game application 3 may be received from other sources, such as e.g. over the Internet) as executed by the processor 10 and, when appropriate, software stored and executed by the protection processor 20, as will be further described hereinafter. The game application 3 may further be said to be aware of the internal organization of the cartridge 2. When it is executed by the processor 10, it may communicate, via the interfaces 14 and 24, with the dispatcher 23 in order to perform at least one action, such as: read data from the ROM 21; read data from or write data in the non-volatile memory 22; and request that the protection processor 20 execute a function and return the result.

A simplified description of the behaviour of the system will now be used in order to further describe the invention. When the cartridge 2 is inserted (or otherwise put in contact with) the console 1, the console 1 initiates the game application 3 by loading a predetermined section (at address 0x00000) of the application stored in the ROM 21. Once the game application 3 executes on the processor 10, it may interact with the dispatcher 23 to read/write information from/to the non-volatile memory 22; request the protection processor 20 to execute functions and, if applicable, to return the result of the executed function; and read further sections of the application from the ROM 21. The functions executed by the secure processor 20 may use one or more parameters provided in the request, but it is also possible that the function uses one or more parameters read from a memory 21, 22 of the cartridge. It is furthermore possible that the secure processor 20 outputs a result to the non-volatile memory 22. The game application 3 is preferably designed so that it cannot operate without the presence of the protection processor 20, but it is also possible for the application to operate in an inferior mode.

During initiation, the game application 3 may thus retrieve all the data stored in the non-volatile memory 22 by reading the data stored from NVM ADDRESS START and NVM ADDRESS END. During the execution and/or at the end, the game application 3 may update this data by storing it in the non-volatile memory 22, if necessary modifying NVM ADDRESS START and/or NVM ADDRESS END.

The game application 3 may also instruct the protection processor 20 to execute a function. This is done by first sending a command and control data to address space PROCESSOR_START to PROCESSOR_END. The game application 3 then writes to address PROCESSOR_WRITE, regularly polls the address PROCESSOR_READ_FLAG and, when the returned value is 1, reads the data in the address space PROCESSOR_START to PROCESSOR_END.

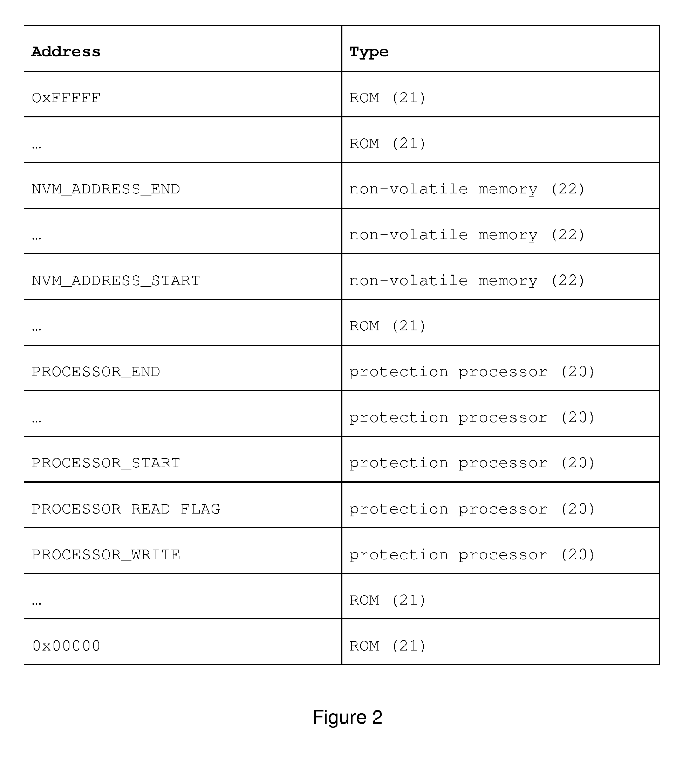

It may thus be said that the game application 3 "sees" a virtual, flat memory space, for example as illustrated in Figure 2. In the memory space, the first part (from the bottom) is for addressing the ROM 20, the next part is for addressing the protection processor 20 in different ways, the third part is also for addressing the ROM 21, the fourth part for interacting with the non-volatile memory 22, and the fifth part also for addressing the ROM 21. It will be appreciated that Figure 2 illustrates one possibility of many, and that other uses of the address space is possible; indeed, it is encouraged to have different uses of the address space for different games. Furthermore, it is possible to have addresses that are not used. If the dispatcher 23 receives such an address, it is preferred to have a predefined behaviour, such as returning random or garbage data, or to request the protection processor 20 to lock.

As already mentioned, it is preferred that the values of at least some of PROCESSOR_WRITE, PROCESSOR_READ_FLAG, PROCESSOR_START, PROCESSOR_END, NVM_ADDRESS_START, and NVM_ADDRESS_END are changed for each new game. This makes it impossible for hackers to build a simple generic backup system, as this will change between applications. In addition, hackers will have to emulate the behaviour of the protection processor 20 for each new cartridge.

An advantage of the invention is that it can enable old consoles to use new, protected cartridges without modification to the former, as the consoles need no knowledge of the architecture of a cartridge.

It will thus be appreciated that the present invention provides an improved software copy protection system.

Each feature disclosed in the description and (where appropriate) the claims and drawings may be provided independently or in any appropriate combination. Features described as being implemented in hardware may also be implemented in software, and vice versa. Connections may, where applicable, be implemented as wireless connections or wired, not necessarily direct or dedicated, connections. Only feature relevant to the invention have been described; features not necessary for the description of the invention have been left out intentionally to facilitate understanding.

Reference numerals appearing in the claims are by way of illustration only and shall have no limiting effect on the scope of the claims.

## Claims

1. A cartridge (2) adapted for use with a console (1), the cartridge (2) comprising:
an interface (24) adapted to communicate with an interface (14) of the console (1);
a first memory (21) adapted to store at least parts of an application (3);
a second memory (22) adapted to store application parameters; and
a processor (20) adapted to execute at least one function; **characterized in that** the cartridge (2) further comprises:
a dispatcher (23) adapted to receive data comprising addressing information from the interface (24), the data originating from the console (1) executing the application (3), and to communicate with, depending on the value of the addressing information, with the first memory (21), the second memory (22) and the processor (20).

2. The cartridge as claimed in claim 1, wherein the first memory (21) is a Read-Only Memory.

3. The cartridge as claimed in claim 1 or 2, wherein the second memory (22) is a non-volatile memory.

4. The cartridge as claimed in claim 1, wherein the processor (20) is further adapted to return a value and the dispatcher (23) is adapted to return the value to the application (3).

5. The cartridge as claimed in claim 1, wherein the processor (20) is a secure processor.

6. The cartridge as claimed in claim 1, wherein the dispatcher (23) further comprises a buffer (230) adapted for use in communication with the processor (21).

7. A method for executing an application (3) on a console (1) that interacts with a cartridge (2) comprising the steps of:
by the application (3) being executed by a processor (10) of the console (1), sending addressing information to the cartridge (2); and
by the dispatcher (23) in the cartridge (2):
receiving the addressing information; and
depending on the addressing information, communicating with one of a first memory (21) adapted to store at least parts of an application (3), a second memory (22) adapted to store application parameters, and a processor (20) in order to read from a memory, write from a memory, or have a function executed by the processor (20) and return the result of the function.
